# EUROPEAN PATENT SPECIFICATION

(11) **EP 1 522 981 B1**
(45) Date of publication and mention of the grant of the patent: **30.01.2008**
(21) Application number: 04396071.5
(22) Date of filing: 08.10.2004
(51) Int. Cl.: G08B 13/14, G08B 25/08

(54) **Monitoring device and system**
Anordnung und System zur Überwachung
Système et dispositif de surveillance

(30) Priority: 10.10.2003 FI 20030365 U; 03.03.2004 FI 20040340
(43) Date of publication of application: 13.04.2005
(73) Proprietor: TAMTRON OY, 33561 Tampere (FI)
(72) Inventor: Asikainen, Pentti Sauli, 35800 Mänttä (FI)
(74) Representative: Kupiainen, Juhani Kalervo

(56) References cited:
- WO-A-01/22701
- WO-A-99/21742
- FR-A- 2 720 178
- GB-A- 2 381 363
- US-A- 6 029 070
- US-A1- 2002 113 704
- US-A1- 2002 115 436
- US-A1- 2003 122 677
- US-A1- 2003 129 992
- US-B1- 6 246 213

## Description

The invention relates to a monitoring device and system, and particularly to a monitoring device that is arranged to be attached to a target to be monitored and to give an alarm by wireless data transmission when the target under control is moved. The invention also relates to a tutoring system connected to said monitoring device and system.

As crime prevails and even increases, the surveillance of property located at a distance, for instance the surveillance of various targets, is nowadays extremely important for example in order to monitor a possible damaging and/or stealing of said target. In particular, the surveillance of movable property, such as bicycles, motor bicycles and various other targets, for example tool and explosive containers, is difficult, because the storage location of movable property changes, and said property is often located in a place that is difficult to control.

In the prior art, there are known some solutions for monitoring movable property that is located in a distant place. In these solutions, in connection with the movable property or target there is arranged a device for detecting unauthorized use of the target, such as for example a position sensor provided with an alarm, used in connection with bicycles and comprising a tubular element, balls placed inside said tubular element, and an element detecting the position of the balls. This kind of prior art monitoring device is activated for instance by mechanically releasing the balls when leaving the property. In addition, it is known to provide prior art monitoring devices by a wirelessly alarming element, in which case, when a target provided with said activated monitoring device is illegally used, a notice to the owner of the unauthorized use can be sent for example by a text message, see for example FR 2,720,178.

However, the prior art includes a few problems; for instance, it very often happens that the owner or surveillant of the target forgets to activate the monitoring device when leaving the target, or he is not completely sure, already having left the target, whether he activated his monitoring device. Moreover, a drawback with mechanical monitoring devices often is that anybody can activate them, and often the canceling of the activation also is easy enough for a person who is even a little bit familiar with the art.

The object of the invention is to create a monitoring device that can be activated at a distance when the target has already been left behind. Another object of the invention is to enable the target surveillant to check that the monitoring device is activated. Yet another object of the invention is to create a monitoring device by which unauthorized persons can be prevented from activating and deactivating the monitoring device. Yet another object of the invention is to realize a tutoring system by which the features of said monitoring device can be improved.

The objects of the invention are reached so that the monitoring device, which is arranged to be attached to the target to be monitored, is provided by a motion sensitive sensor that gives, as its output, a signal when the target to be monitored is moved, and so that the monitoring device is arranged, when it is in active mode, to give an alarm and/or to start a positioning process by means of wireless data transmission when it receives a signal from the motion-sensitive sensor, and also so that the monitoring device is arranged to be activated by means of wireless data transmission. The automatic starting of the positioning process is suited for instance in the surveillance of moving loading, transport and transfer equipment, containers, trains etc. As the target moves, its location is observed. When the target stops, its location is known, and next time the location is observed when the target starts to move. This is achieved as the motion-sensitive sensor activates the positioning features and/or the alarm. In addition, the objects of the invention can be achieved by means of the additional features set forth in the dependent claims.

The monitoring device according to the invention is characterized by what is set forth in claim 1. The monitoring system according to the invention is characterized by what is set forth in claim 21. The tutoring system according to the invention is characterized by what is set forth in claim 27. In addition, a few preferred embodiments of the invention are enlisted in the dependent claims.

The monitoring device and system according to the invention, as well as the connected tutoring system, are particularly designed for monitoring such movable property or target which, when being used without permission, is somehow moved, or the damaging of which causes a motion in the target, such as vibration, which results in an output signal in the motion-sensitive sensor and a successive alarm. The target is for example a bicycle, a motor bicycle, a car, a tool container or an explosive container. The monitoring device according to the invention is particularly advantageous for instance in connection with various containers that can be closed, so that the container can be closed prior to the activation of the monitoring device, and possible false alarms caused by the closing process can thus be avoided. The monitoring device can also be arranged in a location that is advantageous for the surveillance, for example in a place where the container or the like can in practice be broken into. In addition, the monitoring device located inside the container cannot be manipulated without breaking into the container, which as such results in an alarm, in case the monitoring device has been activated. The monitoring device according to the invention can also be attached in some other way and to some other type of property or target than what is suggested above, for instance to doors or windows.

Among the concepts used in the present application, let us point out the following:
- "Alarm sensitivity threshold" is a given limit value to be set in the monitoring device; when said limit value is surpassed, an alarm is given. According to the invention, the output of the motion-sensitive sensor is digitized, so that a change in the sensor output over the set limit value (alarm sensitivity threshold) results in an alarm. According to a preferred embodiment of the invention, the alarm sensitivity threshold is adjusted by means of wireless data transmission, for instance by means of a text message.
- A "motion-sensitive sensor" is preferably an acceleration sensor with 2 or 3 directions. According to an embodiment, the motion-sensitive sensor is a sensor of the SCA100T series manufactured by VTI Hamlin, but naturally the invention does not exclude the use of other types of sensors.
- "Parameterizing" is related, among others, to the changing of parameters: the changing of the password, the moment of activation or deactivation, the setting of the clock, the changing of the alarm sensitivity threshold, power saving features, such as the interval at which the monitoring device is activated and deactivated, observation of the state of the battery, response messages related to activation and deactivation, or the changing an identifier.
- "Mode data of the monitoring device" means the mode of the monitoring device, for example whether the monitoring device is activated, whether the activation or deactivation is parameterized to start at a given point of time, the limit value of the alarm sensitivity threshold, power saving features, such as the interval at which the monitoring device is activated and deactivated, the charge state of the battery, the clock time of the monitoring device, the position data of the monitoring device, and information connected to the base stations detected by the monitoring device, such as the position data of the base stations.
- A "monitoring device" means either a separate device manufactured and optimized for monitoring purposes, or another device, such as a mobile station, provided with the necessary means and functions for operating as a monitoring device, which device may as such also include for example regular mobile phone functions or other functions meant for a purpose other than monitoring. The term monitoring device may also mean a combination of several physically separate devices.

According to a preferred embodiment of the invention, the monitoring device is arranged to be activated by means of wireless data transmission. The monitoring device is activated for example by phoning or sending a given text message or multimedia message (SMS/MMS) to the number of the monitoring device. According to an embodiment, a mere telephone call to the monitoring device number is sufficient, but according to another, alternative embodiment it is necessary, after calling the monitoring device, to punch a given predetermined number sequence in order to activate the monitoring device. When activating the device by a text message, a given code, such as a password, is according to an embodiment sent in the text message to the monitoring device. Also the deactivation of the monitoring device is arranged to be performed by means of wireless data transmission, such as a telephone call and/or a text message.

According to a preferred embodiment of the invention, the monitoring device is arranged to check the identifier of the telephone call or text message, such as the telephone number from which the call or the text message was sent, or according to an embodiment, to check the password included in the text message, and to acknowledge the call or the text message in order to activate the monitoring device, to deactivate the monitoring device, to parameterize it, or to request position data, only in case the detected identifier is the identifier predetermined in the monitoring device. The acceptable identifier, with which the identifier of the call or text message is compared, is recorded in advance for example in the memory of the monitoring device, and it can be changed in connection with parameterizing. According to an embodiment, the number of acceptable identifiers can be more than one, in which case the monitoring device can be parameterized, activated and deactivated by means of several different terminal stations or by several different surveillants.

According to a preferred embodiment of the invention, also the parameterizing of the monitoring device and the position data request is arranged to be carried out by wireless data transmission, for instance by a telephone call and/or a text message.

By parameterizing the monitoring device, it is possible to affect, among others, in the changing of the password, the point of time of starting the activation or deactivation process, the setting of the clock, the alarm sensitivity threshold, power saving features, observing the state of the power source, feedback messages related to activation and deactivation, or changing the identifier. By enquiring mode data, there is achieved information among others of the state of the monitoring device, for instance whether the monitoring device is activated or deactivated, and whether the activation or deactivation is parameterized to begin at a certain point of time, of the values of the alarm sensitivity threshold, power saving features, of the charge state of the power source, of the clock time of the monitoring device, and of the position data of the monitoring device.

According to a preferred embodiment of the invention, the power saving features of the monitoring device are changed by means of text messages. The monitoring device can be parameterized to be activated at predetermined intervals for a given duration in order to save the power source, whereafter the activation is again canceled, so that at least part of the power-consuming components are switched off before the monitoring device is reactivated. The monitoring device can be arranged to be activated for instance once every second, once every 5 seconds, or at various different intervals, or as an alternative, it can be arranged to be continuously active. Particularly the interval adjusted by a parameter related to power saving features can be composed of two parts, the first of which expresses the activation moment of the monitoring device, or the length of time during which the monitoring device is activated, and where the second part expresses the moment of deactivating the monitoring device, or the length of time that the activation is switched off.

According to a preferred embodiment of the invention, the state of the monitoring device power source, such as a battery, can be observed by text messages. When enquiring the charge state of the power source, the reply is transmitted by a text message for example as follows: "name of the target to be monitored; charge state of the power source 80 %". According to this embodiment, the minimum acceptable charge state (limit value) is arranged to be set in the monitoring device by means of a text message. According to an embodiment, the monitoring device also is arranged to transmit the alarm related to the charge state preferably by a text message, when the charge state of the power source drops below a set limit, for instance as follows: "name of the device to be monitored; power source charge left for 2 hours". In a situation where the charge state of the power source is reduced, and the monitoring device should still function for a longer period of time than there is power left in the power source with respect to a continuous activation, the power saving features of the monitoring device can be changed for instance by means of a text message, so that the monitoring device is activated for an instant for example at intervals of 5 seconds, and in the meantime, at least part of the power-consuming components are switched off.

According to a preferred embodiment of the invention, the information of the activation and deactivation is arranged to be transmitted by means of a feedback message, for example as follows: "name of the target to be monitored; activated" or as an alternative "name of the target to be monitored; monitoring switched off'. The feedback message function is arranged to be switched on or off preferably in connection with the parameterizing, by means of a text message.

According to a preferred embodiment of the invention, the monitoring device can also be provided by analog and/or digital input and/or output connections and I/O (input/output) features for various different sensors and/or actuators. In that case, for boosting the monitoring, measurement and operations, there can be used switches, temperature, moisture and/or pressure sensors, theft alarm devices and input data transmitted by them, and respectively the output data can be used for controlling locks, temperatures, pressure etc., and said information can be used as independent or as combined, as the observers of alarms and as performers of the resulting operations.

According to a preferred embodiment of the invention, wireless data transmission is arranged by means of a GSM module, or as an alternative by means of a GPRS, EDGE or a respective data transmission module. Further, according to an embodiment, the monitoring device of the invention is arranged to transmit the position data of a GSM network or some other cellular radio network for instance to the terminal station of the surveillant that carried out the inquiry, or to some other number predetermined in the monitoring device, such as the number to which the alarm also is transmitted. The accuracy of the position data is preferably at least the accuracy of the cell in the radio network, but according to the network positioning system and tutoring system of the invention, the accuracy can be even remarkably higher than that.

According to a preferred embodiment of the invention, the monitoring device is arranged to transmit the data and cellular position of the detected base stations of the cellular radio network. On the basis of the base station data, the position of the device can be calculated fairly accurately, and the cell position shows the location directly, at least at the accuracy of the base station. The position data can be used for locating the target under observation, for instance when said target starts to move, by enquiring the monitoring device which base stations the monitoring device at each moment "hears". The positioning is carried out for example by sending a position enquiry to the monitoring device. As an alternative, by means of parameters, the monitoring device can be arranged to automatically transmit position data in an alarm situation, for instance at intervals defined by parameters. In case the charge state of the power source of the monitoring device has dropped below the limit value, the parameters can be used to command that the monitoring device extends the interval for sending the position data.

The network position data of the cellular radio network used by the monitoring device according to the invention is particularly advantageous, because it is particularly well available, even if the monitoring device should be located indoors, in a container or the like. Even if the target to be monitored and the monitoring device along with it is transferred for example to a steel container, a delivery van, a truck, a railway car, a cellar or other similar location, the position data still is available at a high probability.

According to an embodiment of the invention the monitoring device is adapted to give an alarm if the monitoring device starts to move (in x, y and/or z direction(s)), or the monitoring device deviates from the original cellular position in the cellular radio network.

The terms "network position data" and "network positioning" here mean that when the GSM/GPRS, G3, G4, UMTS, NMT, TDMA/CDMA, Bluetooth, Wlan, Tetra or some other radio unit operating as part of the monitoring device is connected to the network, the monitoring device detects surrounding base stations, by means of which the location of the monitoring device can be deduced. In a situation where several different base stations are detected, it is possible, according to an embodiment of the invention, to deduce the location of the monitoring device on the basis of the detected base stations and their known position data, as the monitoring device detects said base stations. If for instance the monitoring device detects several (from two up to even several hundred) surrounding base stations and their field power, the location of the monitoring device can be deduced on the basis of the positions of the base stations and their field powers, for example by means of triangulation.

According to a preferred embodiment of the invention, the position of the monitoring device can be defined extremely accurately by utilizing the time signal transmitted by the networks, because on the basis of said time signal, it is possible to define the distance of the monitoring device from the serving base station. When the network contains divided cells, so that at least one base station is divided into sectors, the accuracy is further improved, because that sector of each base station where the monitoring device is located is known. Depending on the embodiment in question, the location is calculated either in the monitoring device itself, or as an alternative, the data connected to the base stations is transferred to a service center for calculating the position. The calculated position data can be utilized in the monitoring device itself, for instance by showing its position on the display of the monitoring device, for example on a map display. As an alternative, the position data can be utilized in the service center for instance by controlling where each monitoring device is located in each case.

Typically a monitoring device connected to the network hears several different base stations and automatically selects the strongest base station, through which the data connections are then established. According to an embodiment of the present invention, in network positioning there also are used transmissions of other detected base stations than only that of the strongest base station for positioning the monitoring device. The monitoring device can also be constructed so that in order to improve positioning accuracy, the device automatically and/or at the request of the service center removes the strongest base stations either one by one or in groups, and thus it "measures" the strengths of all surrounding base stations. This is particularly feasible in a case where the maximum number of base stations that the monitoring device can simultaneously listen to is defined. When there are known the terrain conditions, the coordinates (also height) of several base stations, the transmission efficiencies of the base stations and/or the base stations divided into sectors, the calculated position data can, according to the invention, be made even more precise for example on the basis of triangulation. Moreover, it is probable that in the future, as the data transmission speeds and the employed frequencies grow, the density of base stations shall also increase, so that the accuracy in defining the position of the monitoring device according to the invention is further improved.

According to a preferred embodiment of the invention, the monitoring device is also provided with a GPS receiver, in which case the location can be defined extremely accurately at least outdoors, but in some cases also indoors, such as in facilities provided with a textile roof. According to an embodiment, the GPS receiver is arranged directly in connection with the monitoring device, as part of said monitoring device. According to another embodiment, the GPS receiver or the GPS antenna separated from the GPS receiver is arranged at the distance of a wireless connection, for example a Bluetooth connection, from the monitoring device. In that case the GPS receiver or a GPS antenna can be placed in a location that is difficult to detect but otherwise advantageous. According to said embodiments, as the target to be monitored moves as a whole (i.e. the GPS receiver and the monitoring device move together), the position of the monitoring device is accurately defined all the time. In case the monitoring device (the target to be monitored) and the GPS receiver, such as a GPS receiver or a GPS antenna arranged at the distance of a wireless radio connection, are mutually separated at a distance, an alarm can be given according to an embodiment of the invention. In addition, after the monitoring device (the target to be monitored) and the GPS receiver or GPS antenna arranged at the distance of a wireless radio connection from the receiver have separated at a mutual distance, the positioning of the monitoring device can be further continued by means of the transmissions of the base stations, on the basis of the network position data deduced according to the method of the invention. According to a preferred embodiment of the invention, the system of the invention can be provided with a tutoring system that is arranged to record both the data of a given position, calculated on the basis of the transmission data of the base stations, and the exact position data of the corresponding position, received from a GPS receiver or other element, so that both of said position data can be unambiguously connected with each other for instance in a database. The tutoring system can either be integrated as part of the service center or the monitoring device, or it can, according to an embodiment, be arranged as a separate tutoring system that still is at least in a data transmission connection with the monitoring device and/or the service center.

According to the invention, the positioning accuracy can be further improved by telling the exact position of the monitoring device, such as the position data obtained from a GPS receiver, to the monitoring device and/or to the service center, for example by feeding it in directly or by means of a text/multimedia message. According to the method described above, there is arranged a tutoring system database comprising the position data corresponding to given locations, calculated on the basis of the transmission data of the base stations, and the exact position data corresponding to the same locations, obtained from a GPS receiver or some other element, so that these two can be unambiguously connected with each other. Thus it possible, according to a preferred embodiment of the invention, later, in a situation where the position data is defined for example only on the basis of the transmission data of the base stations, apart from the basic network positioning, to perform in the monitoring device and/or in the service center also the defining of the position more closely in the way described above, by means of a database, for example on the basis of data arranged in the database for example by a suitable algorithm.

According to a preferred embodiment of the invention, by means of the method described above, there also is arranged an automatic updating in said database of possible changes taking place in the base station network, for example the updating of the data of new base stations as well as that of temporarily and/or permanently disabled base stations. In that case, for instance after adding a new base station, it can be taken into account when defining the position data, when the quantity of the collected network position data connected to said added base station is sufficient with reference to the exact position data, such as the position data obtained from a GPS receiver. Also in a case where the features of an existing base station are changed, the respective data can be recorded in said database.

According to a preferred embodiment of the invention, the tutoring system provided in connection with a monitoring device and/or a service center can be arranged so that by sending to said tutoring system the exact position data of a given monitoring device for example by a text/multimedia message, there also is defined the network position data for said monitoring device either in the tutoring system or in the service center or in the monitoring device, depending on the embodiment in question, on the basis of the transmission data of the base stations read by the monitoring device, and in the database there is arranged both the sent exact position data and the position data calculated by means of the transmission data of the base stations to be individually connected, so that the position data defined only on the basis of the transmission data of the base stations is made more accurate for example by means of a given algorithm, such as a correction coefficient.

According to a preferred embodiment of the invention, the monitoring device comprises a control unit for observing the output of the motion-sensitive sensor and for comparing it with the defined parameters, such as alarm sensitivity threshold values, and in case the value of the output of the motion-sensitive sensor surpasses the alarm sensitivity threshold, the control unit gives an alarm by the data transmission means of the monitoring device.

According to a preferred embodiment of the invention, the motion-sensitive sensor of the monitoring device is an acceleration sensor. The sensor output can be digitized, and the alarm sensitivity threshold of the monitoring device can be set so that the monitoring device gives an alarm only in case the output of the motion-sensitive sensor surpasses the predetermined limit value of the alarm sensitivity threshold. According to an embodiment, the limit value can be set by means of a telephone call, preferably a text message, in which case the alarm sensitivity of the monitoring device can be changed according to the situation and for example according to the surroundings of the target to be monitored. Consequently for example false alarms can be avoided in locations where vibration and subsequent interference occur, for instance in the vicinity of railways.

The monitoring device according to the invention is particularly advantageous for the manufacturer of the monitoring device as well as for the maintenance person, as regards text message parameterizing. The invention makes it possible for the manufacturer of the monitoring device to produce the monitoring device for example with certain standard settings, so that the implementation of the device can be carried out by means of parameters that are sent as text messages; this saves both money and time, because a professional need not travel to the monitoring device in order to perform the implementation, formatting or other procedure with said device. The implementation of the monitoring device or some other procedure to be carried out with parameters can be arranged to be performed by text messages, irrespective of the location of the user and/or the monitoring device, which can be positioned almost anywhere. In particular, this feature is helpful in the exportation of the monitoring device, and it also reduces expenses in problem situations. After the parameters are set correctly, the end customer can change the identifier, such as the password and the telephone number from which commands are accepted, whereafter the monitoring device is exclusively under the control of the customer.

One of the advantages brought by the present invention is that the monitoring device according to the invention can be made very small and inconspicuous by means of an internal antenna and by utilizing the GSM technology (and according to an embodiment also GPS technology), in which case it is not obvious, from the appearance of the monitoring device, that the device is an alarm device, and that it also can be positioned, which means that at a high probability, the person who has broken into the target or stolen the target does neither notice nor damage the monitoring device, and for example position data can be obtained from the monitoring device even after the target has been stolen and moved as well as during the moving process.

Let us point out one more advantage brought about by the invention: when the monitoring device is placed in a moving structure, such as a vehicle, there is according to the invention achieved an extremely efficient route tracking, where the system according to the invention can arrange it so that an alarm is not given in case the monitoring device stays on the permitted route, and respectively an alarm is given, if the monitoring device deviates from the permitted route. Route tracking is suited for instance to certain transport operations, to machinery that is only allowed to move in certain areas, and even to people (children, old people, guards, guarded people) and animals.

Another particular advantage is that by means of the invention, the activation and deactivation of the monitoring device can be arranged so that the activation or deactivation can only be performed at a certain location, which means that the location of the person performing the activation or deactivation is checked before the operation is accepted. The invention can be used in several different applications, for instance in applications where the opening of a door or a lock is carried out by a telephone call or by a text/multimedia message, in which case it can first be checked that the person performing the operation is sufficiently near to the target, such as a door that he is trying to open. In addition, when the monitoring device is monitoring for example the transport of valuables, it is safer if the deactivation is not allowed to be performed too far from the target. The invention can also be utilized in situations where the working time and/or movements of a person should be observed, and where it is important to verify the place where said person gives his reports.

Preferred embodiments of the invention are described in more detail below with reference to the appended drawings, where
- Figure 1: illustrates an exemplary target monitoring device according to a preferred embodiment of the present invention,
- Figure 2a: illustrates an exemplary monitoring system for monitoring a target according to a preferred embodiment of the present invention,
- Figure 2b: illustrates an exemplary monitoring system for monitoring a target by means of transmissions from several base stations according to a preferred embodiment of the present invention,
- Figure 3: illustrates another exemplary monitoring system for monitoring a target according to a preferred embodiment of the present invention, and
- Figure 4: illustrates an exemplary tutoring system according to a preferred embodiment of the present invention.

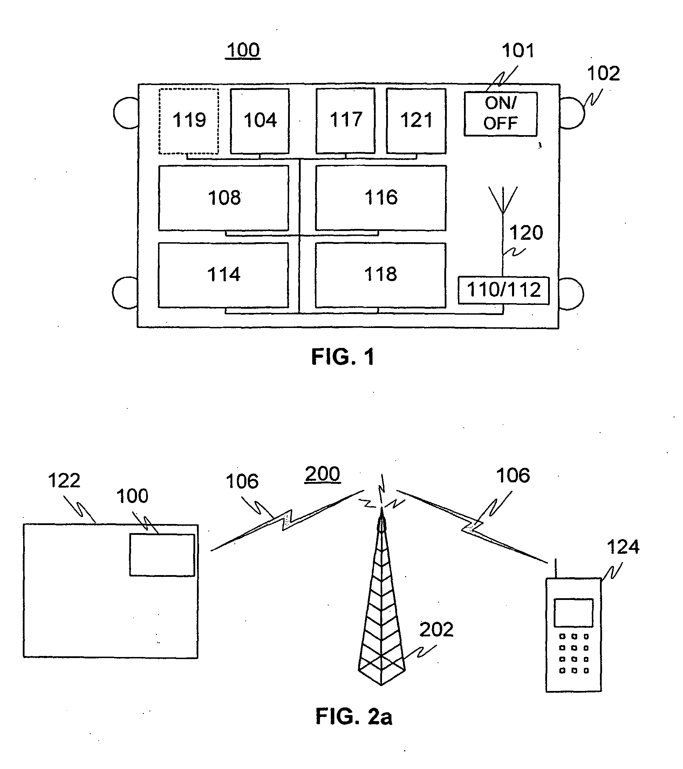

Figure 1 illustrates an exemplary target monitoring device 100 according to a preferred embodiment of the present invention, where the monitoring device is arranged to be activated by wireless data transmission. The monitoring device 100 is activated for example by calling or by sending a given text message from the accepted control number to the number of the monitoring device, or by calling or by sending a text message to the number of the monitoring device, so that in connection with the telephone call or text message there is connected a certain identifier that is only known for the accepted controlling parties. Also the deactivation of the monitoring device is arranged to be carried out by wireless data transmission, such as a telephone call and/or a text message. By making a phone call, the monitoring device is activated or deactivated according to an embodiment by punching a given number or series of numbers, for example by punching 1, in which case the monitoring device is activated, and by punching 2, in which case the monitoring device is deactivated. By means of a text message, the monitoring device is activated or deactivated according to an embodiment by writing a text message "Activate", in which case the monitoring device is activated, and by writing "Deactivate", in which case the monitoring device is deactivated. According to an embodiment, the text message also must contain the correct password, in order to carry out the desired operation.

Advantageously the monitoring device according to the invention also comprises checking means 108 for checking the identifier of the telephone call or text message, such as the telephone number from which the phone call or text message was sent, or according to an embodiment for checking and accepting the password contained in the text message and for accepting the telephone call or text message for activating, deactivating or parameterizing the monitoring device, or for requesting position data, only if the identifier is the identifier predetermined in the monitoring device. The acceptable identifier, with which the identifier of the telephone call or text message is compared, is recorded in advance for example in the memory of the monitoring device, and it can be changed in connection with the parameterizing.

In addition, according to an embodiment the monitoring device of the invention also comprises parameterizing and position data means 116 that are arranged to change the values of the parameters recorded in the memory of the monitoring device and to send requested position data by means of wireless data transmission, such as telephone calls and/or text messages.

Moreover, according to an embodiment, the monitoring device of the invention comprises a GSM module 110 and/or a GPRS, EDGE or other data transmission module 112, as well as an antenna 120, preferably an internal antenna, by means of which the wireless data transmission is arranged. According to an embodiment, the monitoring device of the invention also comprises position data means 114 that are arranged to send position data of the cellular radio network when requested or in connection with an alarm. According to an embodiment, the position data means can also send data related to the base stations "heard" by the monitoring device, such as data identifying the base stations or position data, in which case the receiver of said data can, on the basis of the obtained data, define the location of the monitoring device.

According to an embodiment of the invention, the position data means 114 can also be arranged to calculate the position of the monitoring device on the basis of the transmission data of the base stations that it hears, for example by means of triangulation and/or the transmission powers of the detected stations at the location in question. In that case the position data means 114 can be arranged in a data transmission connection with a third party, such as a service center, for requesting the coordinate data or other additional information of the detected base stations required for calculating the position.

The monitoring device according to the invention also advantageously comprises a control unit 118 for observing the output of the motion-sensitive sensor 104 and for comparing it with the defined parameters, such as the alarm sensitivity threshold values, and, in case the value of the output of the motion-sensitive sensor 104 surpasses the alarm sensitivity threshold, the control unit 118 gives an alarm by means of the data transmission means of the monitoring device. Advantageously the control unit 118 can be arranged to control the activation and deactivation of the monitoring device at defined intervals in order to save power. In case the monitoring device uses the above mentioned input and output signal connections 121 for receiving input data from the sensors and/or sending output data to the actuators, said connections are provided with a connection to the control unit 118 either directly or through a suitable buffering.

Typically the monitoring device 100 according to the invention also includes a power source 117, such as a battery, a solar cell or the like, or a mains power source. In addition, according to an embodiment, the monitoring device 100 also is provided with a power switch 101 and fastening means 102 for fastening the monitoring element to the target to be monitored. Preferably the fastening means 102 are realized by means of a magnet and/or adhesive fastening placed behind the monitoring device 100. In figure 1, the fastening means 102 are illustrated as a lug for drawing technical reasons.

According to an embodiment of the invention, the monitoring device 100 of the invention also comprises a GPS receiver or a receiver 119 of a corresponding inertial positioning system for defining the accurate location of the monitoring device. However, this is an optional embodiment.

Figure 2a illustrates an exemplary monitoring system 200 for monitoring a target 122, such as a bicycle, motor bicycle, car, tool container or explosive container according to a preferred embodiment of the invention, by means of the monitoring device 100 illustrated in figure 1 that can be attached to the target 122. The monitoring device 100 can advantageously be activated or deactivated by means of a mobile station 124, by wireless data transmission 106. Also the parameterizing of the monitoring device, mode data enquiries and the giving of an alarm are arranged to be carried out by wireless data transmission 106. The target supervisor may enquire the mode information of the monitoring device or change the parameterizing advantageously by means of his mobile station 124. Also the alarm from the monitoring device is arranged to be given by intermediation of wireless data transmission 106 to a predetermined mobile station 124.

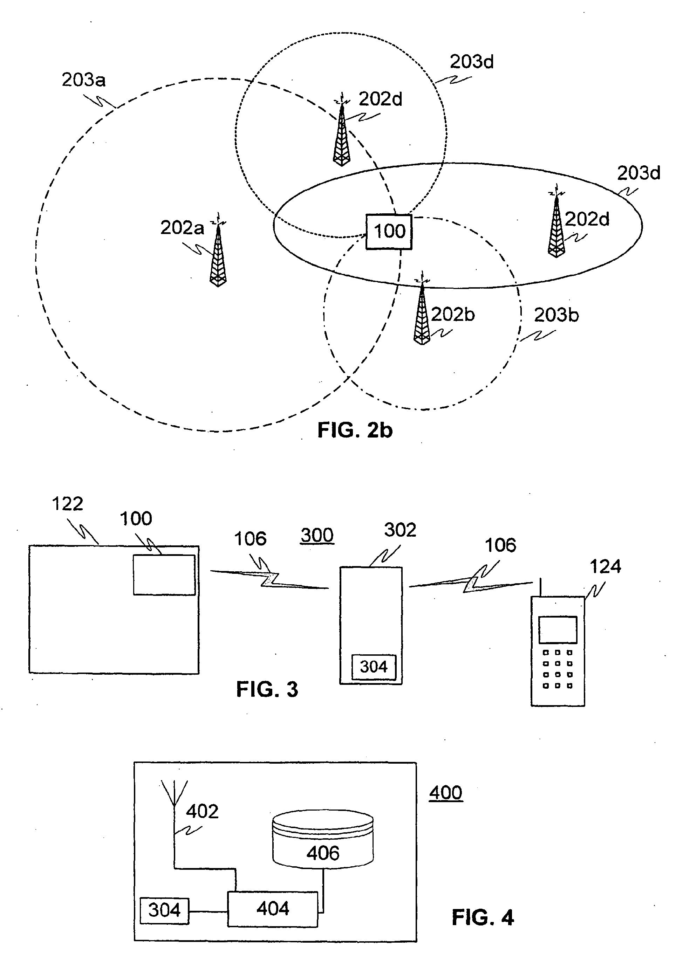

Figure 2b illustrates an exemplary monitoring system 201 for monitoring the target by means of the transmission of several base stations 202a-d according to a preferred embodiment of the present invention, where each base station emits its own transmission, and the transmission advantageously contains at least such information by which the base station can be identified. The location of the monitoring device 100 can according to the invention be calculated for instance on the basis of the strengths of the base stations heard by the monitoring device or by means of triangulation, when the coordinates of the heard base stations are known. The base stations can be for example symmetrically omnidirectional (203a-c), emitting in the shape of a given sector (203d), or the shape of their emission field can also have some other pattern.

Figure 3 illustrates another exemplary monitoring system 300 for monitoring the target 122 according to a preferred embodiment of the present invention, where the monitoring system also comprises a service center 302. Typically the service center according to the example is a third party that is authorized to receive the alarm given by the monitoring device 100, which alarm is further transmitted preferably through GSM/GPRS systems, GSM/EDGE or corresponding systems and base stations to the service center 302, although all parties of the data network are not illustrated in figure 3. According to an embodiment, the service center can be connected to the base station of a wireless network by intermediation of stationary data transmission technology, such as a stationary Internet network.

Moreover, the service center 302 can be arranged to observe the mode data of the monitoring device and to perform different operations, for instance to change the monitoring device parameters according to continuously changing situations or needs. For example, the service center can, on the basis of the mode data transmitted by the monitoring device, change the parameters related to the power saving features of the monitoring device, when the charge of the power source of the monitoring device drops below a given limit value. Preferably the service center can change the interval at which the monitoring device is arranged to be activated and deactivated. It is pointed out that the interval can consist of two parts, where the first part expresses the moment of activating the monitoring device, or the length of the activation period, and where the second part expresses the moment of deactivating the monitoring device, or the length of the deactivation period. When the monitoring device is deactivated, at least part of the power-consuming components of the monitoring device are switched off.

Further, the service center 302 can be arranged to define the position of the monitoring device on the basis of the data sent by the monitoring device, such as data related to the base stations detected by the monitoring device. When it is known which base stations the monitoring device "hears", the position of the monitoring device can be approximated fairly exactly for example by triangulation. According to an embodiment, the service center includes special means 304 for calculating the position of the monitoring device, in which case the position calculating means 304 advantageously calculate the position of the monitoring device, so that the monitoring device sends to the service center 302 data related to the base stations that it hears, such as data for identifying the base stations and data describing the strength of the transmission of the base stations at the location of the monitoring device. By means of the position calculating means 304, the service center 302 can calculate the position of the monitoring device, when the position data of said base stations, such as their coordinates, is known. According to an embodiment, position calculation is based on triangulation. Figure 4 illustrates an exemplary tutoring system 400 according to a preferred embodiment of the present invention. The tutoring system 400 can according to an embodiment be arranged as part of the service center or the monitoring device, or as a separate tutoring system, which is, however, at least in data transmission connection 402 with the monitoring device and/or the service center.

The tutoring system 400 is arranged to record, by means of control means 404, both the position data calculated on the basis of the transmission data of the base stations and corresponding to a given location, as well as the exact position data received from a GPS receiver or other element, corresponding to the same location, so that said position data can be unambiguously connected with each other, for instance in a database 406. According to the description above, there is arranged a tutoring system database 406 comprising the unambiguously connectable calculated position data corresponding to certain positions on the basis of the transmission data of the base stations, and the exact position data received from a GPS receiver or other element. Now later, in a situation where the position data can only be defined for example on the basis of the transmission data of the base stations, in the tutoring system 400, in addition to the basic network positioning, the position is advantageously defined more closely by means of said arranged database 406, for example by a suitable algorithm, such as a correction coefficient, by utilizing the data arranged in the database.

According to a preferred embodiment of the invention, the tutoring system 400 arranged in connection with the monitoring device and/or the service center or separately, can be arranged so that by sending the exact position data of a given monitoring device to said tutoring system 400 for instance as a text/multimedia message, there also is defined the network position data for said monitoring device on the basis of the transmission data of the base stations that the monitoring device hears, and in the database, both the transmitted exact position data and the position data calculated on the basis of the transmission data of the base stations are arranged to be individually interconnected, so that the position data defined merely on the basis of the transmission data of the base stations can be made more accurate for example by means of a given algorithm, such as a correction coefficient.

According to an embodiment, the tutoring system 400 can also comprise position calculating means 304 for calculating the position of the monitoring device, in which case the position calculating means 304 advantageous calculate the position of the monitoring device, so that the monitoring device sends to the tutoring system 400 data related to the base stations that it hears, such as data for identifying the base stations and data describing the strength of the transmission of the base stations at the location of the monitoring device. By means of its position calculating means 304, the tutoring system 400 can calculate the position of the monitoring device, when the position data of said base stations, such as their coordinates, are known. According to an embodiment, position calculation is based on triangulation.

In the specification above, we have only described a few embodiments of the arrangement according to the invention. Naturally the principle according to the invention can be modified within the scope of the appended claims, for example as regards details of the application and the fields of use.

For instance the mobile station 124 for wireless data transmission can, by a variation of the principle of the invention, be replaced by some other remote station, such as a stationary telephone or a data processing device connected to a data network, or by a monitoring system of an alarm/service center (as is illustrated in figure 3), in which case the activation, deactivation and other data transmission of the monitoring device can be arranged to be carried out for example through email or an Internet page. Also in this case, data transmission to a monitoring device 100 according to the invention is, however, arranged wirelessly from some base station, even if the terminal station replacing the mobile station 124 should be in the data network through a wired arrangement.

It is also pointed out that the monitoring device according to the invention can be realized by means of any suitable, advantageously 2- or 3-directional acceleration sensor, and that the above mentioned micromechanical acceleration sensor of the SCA100T series manufactured by VTI Hamlin is only one example of the motion-sensitive sensor possibly used in the monitoring device of the invention.

Moreover, it is pointed out that in the above specification, the GSM/GPRS technology and the GSM/EDGE technology are only described as an exemplary channel through which the invention is realized, and that it can be replaced by some other technology known for those skilled in the art, such as for example by one of the following: G3, G4, UMTS, TDMA/CDMA WLAN, Tetra, NMT, and/or Bluetooth.

## Claims

1. A monitoring device (100) arranged to be attached (102) to a target (122) to be monitored, said monitoring device comprising a motion-sensitive sensor (104) that is arranged to give a signal as an output when the target to be monitored is moved, and which monitoring device is arranged, when it is active, to give an alarm by means of wireless data transmission (106) when receiving a signal from the motion-sensitive sensor (104), **characterized in that** the monitoring device (100) can be activated by means of wireless data transmission and deactivated, and wherein the monitoring device has a power saving mode, wherein it is arranged to be activated and deactivated at certain intervals, and wherein the value of the intervals is defined by parameterizing the monitoring device.

2. A monitoring device according to vlaim 1, **characterized in that** the interval is defined by parameterizing the monitoring device.

3. A monitoring device according to claim 1 or 2, **characterized in that** the monitoring device is arranged to be activated and deactivated at certain intervals after the charge state of the power source (117) has dropped below a predetermined limit value.

4. A monitoring device according any of the preceding claims, **characterized in that** it comprises a control unit (118), which is arranged to control the activation and deactivation of the monitoring device at defined intervals.

5. A monitoring device according to any of the preceding claims, **characterized in that** the monitoring device is arranged to send a notice after the charge state of the power source (117) has dropped below a predetermined limit value.

6. A monitoring device according to any of the preceding claims, **characterized in that** the deactivation of the monitoring device is arranged to be carried out by means of wireless data transmission (106, 120, 124).

7. A monitoring device according to any of the preceding claims, **characterized in that** the activation and deactivation of the monitoring device is arranged to be carried out by a telephone call or a text message (106, 120, 124) transmitted to the monitoring device.

8. A monitoring device according to any of the preceding claims, **characterized in that** parameterizing of the monitoring device is arranged to be carried out by means of a telephone call or a text message (106, 120, 124).

9. A monitoring device according to any of the preceding claims, **characterized in that** the monitoring device is arranged to check (108) the identifier of the telephone call or text message and to accept the telephone call or text message for activating, deactivating or parameterizing the monitoring device, or for enquiring position data, only in case the identifier is the specific identifier predetermined for the monitoring device.

10. A monitoring device according to claim 9, **characterized in that** the identifier is at least one of the following: a telephone number, and a password included in a text message.

11. A monitoring device according to any of the preceding claims, **characterized in that** the wireless data transmission is arranged by means of a module, said module being one of the following: a GSM module (110), a GPRS module (112), an EDGE module, and a Bluetooth module.

12. A monitoring device according to any of the preceding claims, **characterized in that** the monitoring device is arranged to transmit (114) position data and/or data of the detected base stations at defined instances.

13. A monitoring device according to any of the claims 11-12, **characterized in that** the monitoring device is arranged to start the positioning operation when receiving a signal from the motion-sensitive sensor (104).

14. A monitoring device according to claim 11, **characterized in that** the monitoring device is arranged to calculate the position data on the basis of the data transmitted by the position data means (114) and the data transmitted by the base stations (202) that the monitoring device can hear.

15. A monitoring device according to claim 8, **characterized in that** the monitoring device is arranged to calculate the position data by means of triangulation, by utilizing the data of the detected base stations (202), said data containing at least one of the following: the base station location, the base station efficiency, the base station height, information of cells divided into sectors, terrain information, and surroundings information.

16. A monitoring device according to any of the preceding claims, **characterized in that** the monitoring device is arranged, when requested, to send the data (116) of the monitoring device, said data being at least one of the following: is the monitoring device activated, is the monitoring device deactivated, the limit value of the alarm sensitivity threshold, data related to the power saving feature, the charge state of the power source, and the clock time of the monitoring device.

17. A monitoring device according to any of the preceding claims, **characterized in that** the monitoring device comprises a control unit (118), which control unit (118) is arranged to compare the output from the motion-sensitive sensor (104) with the defined parameters and to give an alarm when the output from the motion-sensitive sensor (104) surpasses the alarm sensitivity threshold.

18. A monitoring device according to any of the preceding claims, **characterized in that** the monitoring device (100) comprises GPS positioning means (119).

19. A monitoring device according to any of the preceding claims, **characterized in that** the monitoring device (100) comprises at least one of the following connections (121): input connection for an external sensor, and output connection for an external actuator.

20. A monitoring device according to any of the preceding claims, **characterized in that** the monitoring device (100) is adapted to give an alarm if the monitoring device deviates from the original cellular position in the cellular radio network.

21. A monitoring system (200, 300) including a monitoring device (100) according to claim 1 that is arranged to be attached (102) to the target (122) to be monitored, said monitoring device comprising a motion-sensitive sensor (104) that is arranged to give a signal as an output when the target to be monitored is moved, and which monitoring device is arranged, when it is active, to give an alarm by means of wireless data transmission (106) when receiving a signal from the motion-sensitive sensor (104), **characterized in that** the monitoring device (100) can be activated and deactivated, and wherein the monitoring device has a power saving mode, wherein it is arranged to be activated and deactivated at certain intervals, and wherein the value of the interval is controllable.

22. A monitoring system according to claim 22, **characterized in that** the monitoring system includes a service center (302) that is arranged to receive an alarm from the monitoring device.

23. A monitoring system according to claim 22, **characterized in that** the service center (302) is arranged to observe the position data of the monitoring device (100) and on the basis of said position data, to change the interval at which the monitoring device is arranged to be activated and deactivated.

24. A monitoring system according to any of the claims 22, **characterized in that** the service center (302) is arranged to calculate position data of the monitoring device (100) on the basis of the data sent by the monitoring device and related to the detected base stations.

25. A monitoring system according to claim 24, **characterized in that** the service center (302) is arranged to calculate the position data of the monitoring device (100) by means of triangulation, by utilizing the data from the detected base stations (202), said data containing at least one of the following: the base station position, the base station efficiency, the base station height, information of the cells divided into sectors, terrain information, and surroundings information.

26. A monitoring system according to any of the claims 21-25, **characterized in that** the service center (302) is arranged to define the position data of a device from which there is sent to the monitoring device (100) a message related to activation or deactivation.

## Patentansprüche

1. Überwachungsgerät (100), das an einem zu überwachenden Ziel (122) anbringbar (102) ist, wobei das Überwachungsgerät einen bewegungsempfindlichen Sensor (104) aufweist, der so gestaltet ist, daß er ein Signal als eine Ausgabe liefert, wenn das zu überwachende Ziel bewegt wird, und das Überwachungsgerät gestaltet ist, im aktiven Zustand einen Alarm mittels drahtloser Datenübertragung (106) bei Erhalt eines Signals vom bewegungsempfindlichen Sensor (104) zu geben, **dadurch gekennzeichnet, daß** das Überwachungsgerät (100) mittels drahtloser Datenübertragung aktivier- und deaktivierbar ist und daß das Überwachungsgerät einen Energiesparmodus aufweist, in dem es in bestimmten Intervallen aktivier- und deaktivierbar ist und in dem der Wert der Intervalle durch Parametrisierung des Überwachungsgeräts definiert ist.

2. Überwachungsgerät nach Anspruch 1, **dadurch gekennzeichnet, daß** das Intervall durch Parametrisierung des Überwachungsgeräts definiert ist.

3. Überwachungsgerät nach Anspruch 1 oder 2, **dadurch gekennzeichnet, daß** das Überwachungsgerät in bestimmten Intervallen aktiver- und deaktivierbar ist, nachdem der Ladezustand der Stromversorgung (117) unter einen vorab festgelegten Grenzwert gefallen ist.

4. Überwachungsgerät nach einem der vorangehenden Ansprüche, **dadurch gekennzeichnet, daß** es eine Steuereinheit (118) aufweist, die zur Steuerung der Aktivierung und Deaktivierung des Überwachungsgeräts in definierten Intervallen gestaltet ist.

5. Überwachungsgerät nach einem vorangehenden Ansprüche, **dadurch gekennzeichnet, daß** das Überwachungsgerät gestaltet ist, eine Notiz zu senden, nachdem der Ladezustand der Stromversorgung (117) unter einen vorab festgelegten Grenzwert gefallen ist.

6. Überwachungsgerät nach einem der vorangehenden Ansprüche, **dadurch gekennzeichnet, daß** die Deaktivierung des Überwachungsgeräts mittels drahtloser Datenübertragung (106, 120, 124) durchführbar ist.

7. Überwachungsgerät nach einem der vorangehenden Ansprüche, **dadurch gekennzeichnet, daß** die Aktivierung und Deaktivierung des Überwachungsgeräts durch einen Telefonanruf oder eine an das Überwachungsgerät gesendete Textnachricht (106, 120, 124) durchführbar ist.

8. Überwachungsgerät nach einem der vorangehenden Ansprüche, **dadurch gekennzeichnet, daß** die Parametrisierung des Überwachungsgeräts mittels eines Telefonanrufs oder einer Textnachricht (106, 120, 124) durchführbar ist.

9. Überwachungsgerät nach einem der vorangehenden Ansprüche, **dadurch gekennzeichnet, daß** das Überwachungsgerät gestaltet ist, die Kennung des Telefonanrufs oder der Textnachricht zu überprüfen (108) und den Telefonanruf oder die Textnachricht zur Aktivierung, Deaktivierung oder Parametrisierung des Überwachungsgeräts, oder zur Abfrage von Positionsdaten nur in dem Fall zu akzeptieren, daß die Kennung die für das Überwachungsgerät vorab bestimmte spezielle Kennung ist.

10. Überwachungsgerät nach Anspruch 9, **dadurch gekennzeichnet, daß** die Kennung mindestens eine(s) der folgenden ist: eine Telefonnummer und ein in einer Textnachricht enthaltenes Paßwort.

11. Überwachungsgerät nach einem der vorangehenden Ansprüche, **dadurch gekennzeichnet, daß** die drahtlose Datenübertragung mittels eines Moduls durchgeführt wird, wobei das Modul eines der folgenden ist: ein GSM-Modul (110), ein GPRS-Modul (112), ein EDGE-Modul und ein Bluetooth-Modul.

12. Überwachungsgerät nach einem der vorangehenden Ansprüche, **dadurch gekennzeichnet, daß** das Überwachungsgerät gestaltet ist, Positionsdaten und/oder Daten der detektierten Basisstationen in definierten Fällen zu senden (114).

13. Überwachungsgerät nach einem der Ansprüche 11 - 12, **dadurch gekennzeichnet, daß** das Überwachungsgerät gestaltet ist, den Ortungsvorgang bei Empfang eines Signals vom bewegungsempfindlichen Sensor (104) zu starten.

14. Überwachungsgerät nach Anspruch 11, **dadurch gekennzeichnet, daß** das Überwachungsgerät gestaltet ist, die Positionsdaten auf der Grundlage der von dem Positionsdatenmittel (114) gesendeten Daten und der von den Basisstationen (202) gesendeten Daten, die das Überwachungsgerät hören kann, zu berechnen.

15. Überwachungsgerät nach Anspruch 8, **dadurch gekennzeichnet, daß** das Überwachungsgerät gestaltet ist, die Positionsdaten mittels Triangulation, durch Verwendung der Daten der detektierten Basisstationen (202) zu berechnen, wobei die Daten mindestens eine(n) von folgendem enthalten: den Basisstationsort, die Basisstationseffizienz, die Basisstationshöhe, Information über die in Sektoren unterteilten Zellen, Geländeinformation und Umgebungsinformation.

16. Überwachungsgerät nach einem der vorangehenden Ansprüche, **dadurch gekennzeichnet, daß** das Überwachungsgerät gestaltet ist, auf Anfrage die Daten (116) des Überwachungsgeräts zu senden, wobei die Daten mindestens eines von folgendem sind: ist das Überwachungsgerät aktiviert, ist das Überwachungsgerät deaktiviert, der Grenzwert der Alarmempfindlichkeitsschwelle, Daten bezüglich der Energiespareigenschaft, den Ladezustand der Stromquelle und die Zeit des Überwachungsgeräts.

17. Überwachungsgerät nach einem der vorangehenden Ansprüche, **dadurch gekennzeichnet, daß** das Überwachungsgerät eine Steuereinheit (118) aufweist, wobei die Steuereinheit (118) gestaltet ist, um die Ausgabe von dem bewegungsempfindlichen Sensor mit den definierten Parametern zu vergleichen und einen Alarm zu geben, wenn die Ausgabe von dem bewegungsempfindlichen Sensor (104) den Alarmempfindlichkeitsschwellenwert überschreitet.

18. Überwachungsgerät nach einem der vorangehenden Ansprüche, **dadurch gekennzeichnet, daß** das Überwachungsgerät (100) ein GPS-Ortungsmittel (119) aufweist.

19. Überwachungsgerät nach einem der vorangehenden Ansprüche, **dadurch gekennzeichnet, daß** Überwachungsgerät (100) mindestens einen der folgenden Anschlüsse (121) aufweist: Eingabeanschluß für einen externen Sensor und Ausgabeanschluß für einen externen Aktuator.

20. Überwachungsgerät nach einem der vorangehenden Ansprüche, **dadurch gekennzeichnet, daß** das Überwachungsgerät (100) gestaltet ist, einen Alarm zu geben, wenn das Überwachungsgerät von der ursprünglichen Zellenposition in dem Zellenfunknetz abweicht.

21. Überwachungssystem (200, 300) mit einem Überwachungsgerät (100) nach Anspruch 1, das an einem zu überwachenden Ziel (122) anbringbar (102) ist, wobei das Überwachungsgerät einen bewegungsempfindlichen Sensor (104) aufweist, der so gestaltet ist, daß er ein Signal als eine Ausgabe liefert, wenn das zu überwachende Ziel bewegt wird, und das Überwachungsgerät gestaltet ist, im aktiven Zustand einen Alarm mittels drahtloser Datenübertragung (106) bei Erhalt eines Signals vom bewegungsempfindlichen Sensor (104) zu geben, **dadurch gekennzeichnet, daß** das Überwachungsgerät (100) aktivert- und deaktivierbar ist und daß das Überwachungsgerät einen Energiesparmodus aufweist, in dem es in bestimmten Intervallen aktivier- und deaktivierbar ist und in dem der Wert des Intervalls steuerbar ist.

22. Überwachungssystem nach Anspruch 22, **dadurch gekennzeichnet, daß** das Überwachungssystem ein Servicecenter (302) enthält, das gestaltet ist, um einen Alarm vom Überwachungsgerät zu empfangen.

23. Überwachungssystem nach Anspruch 22, **dadurch gekennzeichnet, daß** das Servicecenter (302) gestaltet ist, um die Positionsdaten des Überwachungsgeräts (100) zu beobachten und auf der Grundlage der Positionsdaten das Intervall zu ändern, in dem das Überwachungsgerät aktiver- und deaktivierbar ist.

24. Überwachungssystem nach Anspruch 22, **dadurch gekennzeichnet, daß** das Servicecenter (362) gestaltet ist, Positionsdaten des Überwachungsgeräts (100) auf der Grundlage der von dem Überwachungsgerät gesendeten und zu den detektierten Basisstationen gehörigen Daten zu berechnen.

25. Überwachungssystem nach Anspruch 24, **dadurch gekennzeichnet, daß** das Servicecenter (302) gestaltet ist, die Positionsdaten des Überwachungsgeräts (100) mittels Triangulation, durch Verwendung der Daten von den detektierten Basisstationen (202), zu berechnen, wobei die Daten mindestens eine der folgenden enthalten: die Basisstationsposition, die Basisstationseffizienz, die Basisstationshöhe, Information über die in Sektoren unterteilten Zellen, Geländeinformation und Umgebungsinformation.

26. Überwachungssystem nach einem der Ansprüche 21 - 25, **dadurch gekennzeichnet, daß** das Servicecenter (302) gestaltet ist, die Positionsdaten eines Geräts zu definieren, von dem eine mit Aktivierung oder Deaktivierung in Beziehung stehende Nachricht zum Überwachungsgerät (100) gesendet wird.

## Revendications

1. Dispositif de surveillance (100) disposé pour être attaché (102) à une cible (122) à surveiller, ledit dispositif de surveillance comprenant un capteur sensible au mouvement (104) qui est disposé pour donner un signal comme une sortie lorsque la cible à surveiller est déplacée, et lequel dispositif de surveillance est disposé, lorsqu'il est actif, pour donner une alarme par un moyen de transmission de données sans fil (106) lors de la réception d'un signal à partir du capteur sensible au mouvement (104), **caractérisé en ce que** le dispositif de surveillance (100) peut être activé au moyen d'une transmission de données sans fil et désactivé, et dans lequel le dispositif de surveillance a un mode d'économie d'énergie, où il est disposé pour être activé et désactivé à certains intervalles, et dans lequel la valeur des intervalles est définie par paramétrage du dispositif de surveillance.

2. Dispositif de surveillance selon la revendication 1, **caractérisé en ce que** l'intervalle est défini par le paramétrage du dispositif de surveillance.

3. Dispositif de surveillance selon la revendication 1 ou 2, **caractérisé en ce que** le dispositif de surveillance est disposé pour être activé ou désactivé à certains intervalles après que l'état de charge de la source d'énergie (117) a chuté sous une valeur limite prédéterminée.

4. Dispositif de surveillance selon l'une quelconque des revendications précédentes, **caractérisé en ce qu'**il comprend une unité de commande (118), qui est disposée pour commander l'activation et la désactivation du dispositif de surveillance à des intervalles définis.

5. Dispositif de surveillance selon l'une quelconque des revendications précédentes, **caractérisé en ce que** le dispositif de surveillance est disposé pour envoyer un avertissement après que l'état de charge de la source d'énergie (117) a chuté sous une valeur limite prédéterminée.

6. Dispositif de surveillance selon l'une quelconque des revendications précédentes, **caractérisé en ce que** la désactivation du dispositif de surveillance est disposée pour être réalisée au moyen d'une transmission de données sans fil (106, 120, 124).

7. Dispositif de surveillance selon l'une quelconque des revendications précédentes, **caractérisé en ce que** l'activation et la désactivation du dispositif du surveillance sont disposées pour être réalisées par un appel téléphonique ou un message de texte (106, 120, 124) transmis au dispositif de surveillance.

8. Dispositif de surveillance selon l'une quelconque des revendications précédentes, **caractérisé en ce que** le paramétrage du dispositif de surveillance est disposé pour être réalisé au moyen d'un appel téléphonique ou d'un message de texte (106, 120, 124).

9. Dispositif de surveillance selon l'une quelconque des revendications précédentes, **caractérisé en ce que** le dispositif de surveillance est disposé pour contrôler (108) l'identifieur de l'appel téléphonique ou du message de texte et pour accepter l'appel téléphonique ou le message de texte pour activer, désactiver ou paramétrer le dispositif de surveillance, ou pour interroger les données de position, seulement dans le cas où l'identifieur est l'identifieur spécifique prédéterminé pour le dispositif de surveillance.

10. Dispositif de surveillance selon la revendication 9, **caractérisé en ce que** l'identifieur est au moins un de ce qui suit : un numéro de téléphone, et un mot de passe compris dans un message de texte.

11. Dispositif de surveillance selon l'une quelconque des revendications précédentes, **caractérisé en ce que** la transmission de données sans fil est disposée au moyen d'un module, ledit module étant un de ce qui suit : un module GSM (110), un module GPRS (112), un module EDGE, et un module Bluetooth.

12. Dispositif de surveillance selon l'une quelconque des revendications précédentes, **caractérisé en ce que** le dispositif de surveillance est disposé pour transmettre (114) des données de position et/ou des données des stations de base détectées à des exemples définis.

13. Dispositif de surveillance selon l'une quelconque des revendications 11-12, **caractérisé en ce que** le dispositif de surveillance est disposé pour démarrer l'opération de positionnement lors de la réception d'un signal à partir du capteur sensible au déplacement (104).

14. Dispositif de surveillance selon la revendication 11, **caractérisé en ce que** le dispositif de surveillance est disposé pour calculer les données de position sur la base des données transmises par le moyen de données de position (114) et les données transmises par les stations de base (202) que le dispositif de surveillance peut écouter.

15. Dispositif de surveillance selon la revendication 8, **caractérisé en ce que** le dispositif de surveillance est disposé pour calculer les données de position au moyen d'une triangulation, en utilisant les données des stations de base détectées (202), les données contenant au moins un de ce qui suit : l'emplacement de la station de base, le rendement de la station de base, la hauteur de la station de base, les informations de cellules divisées en secteurs, les informations de terrain, et les informations d'environnement.

16. Dispositif de surveillance selon l'une quelconque des revendications précédentes, **caractérisé en ce que** le dispositif de surveillance est disposé, lorsque demandé, pour envoyer les données (116) du dispositif de surveillance, lesdites données étant au moins un de ce qui suit : est le dispositif de surveillance activé, est le dispositif de surveillance désactivé, la valeur limite du seuil de sensibilité l'alarme, des données liées à la caractéristique d'économique d'énergie, l'état de charge de la source d'énergie, et l'heure d'horloge du dispositif de surveillance.

17. Dispositif de surveillance selon l'une quelconque des revendications précédentes, **caractérisé en ce que** le dispositif de surveillance comprend une unité de commande (118), laquelle unité de commande (118) est disposée pour comparer la sortie à partir du capteur sensible au mouvement (104) avec les paramètres définis et pour donner une alarme lorsque la sortie du capteur sensible au mouvement (104) surpasse le seuil de sensibilité d'alarme.

18. Dispositif de surveillance selon l'une quelconque des revendications précédentes, **caractérisé en ce que** le dispositif de surveillance (100) comprend un moyen de positionnement GPS (119).

19. Dispositif de surveillance selon l'une quelconque des revendications précédentes, **caractérisé en ce que** le dispositif de surveillance (100) comprend au moins une des connexions suivantes (121) : connexion d'entrée pour un capteur externe, et connexion de sortie pour un actionneur externe.

20. Dispositif de surveillance selon l'une quelconque des revendications précédentes, **caractérisé en ce que** le dispositif de surveillance (100) est adapté pour donner une alarme si le dispositif de surveillance dévie à partir de la position cellulaire originale dans le réseau de radio cellulaire.

21. Système de surveillance (200, 300) comprenant un dispositif de surveillance (100) selon la revendication 1 qui est disposé pour être fixé (102) à la cible (122) à surveiller, ledit dispositif de surveillance comprenant un capteur sensible au déplacement (104) qui est disposé pour donner un signal comme une sortie lorsque la cible à surveiller est déplacé, et lequel dispositif de surveillance est disposé, lorsqu'il est actif, pour donner une alarme au moyen d'une transmission de données sans fil (106) lors de la réception d'un signal à partir du capteur sensible au déplacement (104), **caractérisé en ce que** le dispositif de surveillance (100) peut être activé et désactivé, et dans lequel le dispositif de surveillance a un mode d'économie d'énergie, dans lequel il est disposé pour être activé et désactivé à certains intervalles, et dans lequel la valeur de l'intervalle est commandable.

22. Dispositif de surveillance selon la revendication 22, **caractérisé en ce que** le système de surveillance comprend un centre de service (302) qui est disposé pour recevoir une alarme à partir du dispositif de surveillance.

23. Dispositif de surveillance selon la revendication 22, **caractérisé en ce que** le centre de service (302) est disposé pour observer les données de position du dispositif de surveillance (100) et sur la base desdites données de position, pour changer l'intervalle auquel le dispositif de surveillance est disposé pour être activé et désactivé.

24. Dispositif de surveillance selon l'une quelconque des revendications précédentes, **caractérisé en ce que** le centre de service (302) est disposé pour calculer des données de position du dispositif de surveillance (100) sur la base des données envoyées par le dispositif de surveillance et liées aux stations de base détectées.

25. Dispositif de surveillance selon la revendication 24, **caractérisé en ce que** le centre de service (302) est disposé pour calculer les données de position du dispositif de surveillance (100) au moyen de la triangulation, en utilisant les données à partir des stations de base détectées (202), lesdites données comprenant au moins un de ce qui suit : la position de station de base, le rendement de station de base, la hauteur de station de base, les informations des cellules divisées en secteurs, des informations de terrain et des informations d'environnement.

26. Dispositif de surveillance selon l'une quelconque des revendications 21 à 25, **caractérisé en ce que** le centre de service (302) est disposé pour définir les données de position d'un dispositif à partir duquel il est envoyé au dispositif de surveillance (100) un message lié à l'activation et à la désactivation
